# FASCICULE DE BREVET EUROPEEN

(11) **EP 3 912 466 B1**
(45) Date de publication et mention de la délivrance du brevet: **21.12.2022**
(21) Numéro de dépôt: 21173313.4
(22) Date de dépôt: 11.05.2021
(51) Int. Cl.: A01M 7/00

(54) **ENSEMBLE POUR SYSTEME DE PULVERISATION AGRICOLE COMPRENANT UN DISPOSITIF D'AMORTISSEMENT D'UN MOUVEMENT PENDULAIRE D'UNE DESCENTE DE PULVERISATION**
ANORDNUNG FÜR EIN LANDWIRTSCHAFTLICHES SPRÜHSYSTEM, DIE EINE VORRICHTUNG ZUR DÄMPFUNG EINER PENDELBEWEGUNG EINES SPRÜHGESTÄNGES UMFASST
ASSEMBLY FOR AGRICULTURAL SPRAYING SYSTEM COMPRISING A DAMPING DEVICE OF A PENDULAR DOWNWARD SPRAYING MOVEMENT

(30) Priorité: 20.05.2020 FR 2005272
(43) Date de publication de la demande: 24.11.2021
(73) Titulaire: Exel Industries, 51200 Epernay (FR)
(72) Inventeur: BALLU, Cyril, 75009 PARIS (FR)
(74) Mandataire: Argyma

(56) Documents cités:
- EP-A1- 0 408 404
- EP-A2- 0 278 925
- FR-A1- 2 762 187
- FR-A1- 2 785 770
- US-B1- 6 209 257

## Description

### DOMAINE TECHNIQUE

L'invention concerne un ensemble pour système de pulvérisation agricole, un système de pulvérisation agricole pour engin agricole comprenant un tel ensemble, ainsi qu'un engin agricole comprenant un tel système de pulvérisation agricole.

### ÉTAT DE LA TECHNIQUE ANTÉRIEURE

De manière connue, par exemple de FR 2 785 770 A1, un système de pulvérisation agricole comprend une rampe s'étendant suivant une direction transversale par rapport à une direction longitudinale d'avancement du système de pulvérisation agricole, orientée d'arrière en avant, ainsi qu'une ou plusieurs descentes de pulvérisation montées de manière pendulaire le long de la rampe et comprenant un ou plusieurs dispositifs de pulvérisation destinés à pulvériser globalement transversalement un liquide de traitement sur des végétaux à traiter, tels que des vignes, des arbres ou des arbustes.

Ce mouvement pendulaire des descentes de pulvérisation leur permet notamment de franchir des obstacles imprévus, qui peuvent même être formés par les végétaux à traiter eux-mêmes, sans risque de détériorations des descentes de pulvérisation ou des végétaux à traiter leur faisant obstacle.

Toutefois, ce mouvement pendulaire des descentes de pulvérisation peut être très brutal, par exemple lorsque le système de pulvérisation agricole avance à vitesse élevée, et endommager en lui-même les descentes de pulvérisation.

### EXPOSÉ DE L'INVENTION

Afin de pallier cet inconvénient, la présente invention a pour objet un ensemble pour système de pulvérisation agricole, comprenant :
- une chape fixe,
- une première bascule montée basculante sur la chape autour d'un premier axe de basculement globalement orienté suivant une direction horizontale transversale par rapport à une direction horizontale longitudinale orientée d'arrière en avant,
- une descente de pulvérisation comprenant au moins un dispositif de pulvérisation conçu pour pulvériser un liquide de traitement sur des végétaux à traiter d'un champ, la descente de pulvérisation étant conçue pour penduler par rapport à la première bascule autour d'une position de repos dans laquelle la descente de pulvérisation s'étend globalement suivant une direction verticale, la descente de pulvérisation étant en outre conçue pour entraîner en basculement la première bascule depuis une position relâchée vers une position basculée, dans un premier sens de basculement, lorsque la descente de pulvérisation pendule, de l'avant vers l'arrière suivant la direction longitudinale, depuis une position d'entraînement confondue avec la position de repos ou dans laquelle la descente de pulvérisation est inclinée vers l'arrière par rapport à la position de repos,
- un premier dispositif d'amortissement s'étendant suivant un premier axe d'extension entre une première extrémité montée sur la chape et une deuxième extrémité opposée montée sur la première bascule, le premier dispositif d'amortissement étant en outre conçu pour amortir le basculement de la première bascule depuis sa position relâchée vers sa position basculée, dans le premier sens de basculement, de manière à amortir le mouvement pendulaire de la descente de pulvérisation depuis sa position d'entraînement.

Selon des variantes de réalisation qui peuvent être prises ensemble ou séparément :
- l'ensemble comprend une deuxième bascule par l'intermédiaire de laquelle le premier dispositif d'amortissement est monté sur la première bascule, le premier dispositif d'amortissement étant ainsi monté entre la chape et la deuxième bascule, en s'étendant entre ses première et deuxième extrémités suivant le premier axe d'extension ;
- la deuxième bascule est montée basculante sur la chape autour d'un deuxième axe de basculement, sensiblement parallèle au premier axe de basculement ;
- la première bascule est conçue pour entraîner en basculement la deuxième bascule depuis une position relâchée vers une position basculée, dans un deuxième sens de basculement, opposé au premier sens de basculement, lorsque la première bascule bascule elle-même depuis sa position relâchée vers sa position basculée, dans le premier sens de basculement ;
- le premier dispositif d'amortissement est conçu pour amortir le basculement de la deuxième bascule depuis sa position relâchée vers sa position basculée, dans le deuxième sens de basculement ;
- la première bascule comprend une came conçue pour coopérer avec la deuxième bascule et pour entraîner la deuxième bascule en basculement depuis sa position relâchée vers sa position basculée, dans le deuxième sens de basculement, par l'intermédiaire d'au moins une surface de suiveur de came portée par la deuxième bascule, lorsque la première bascule bascule de sa position relâchée vers sa position basculée, dans le premier sens de basculement ;
- la came est formée par un axe sensiblement parallèle au deuxième axe de basculement, l'axe formant la came étant monté glissant dans une fente ou une rainure formant la ou les surfaces de suiveur de came et s'étendant suivant une ligne d'extension, sensiblement perpendiculaire à l'axe formant la came ;
- l'axe formant la came est conçu pour se rompre, en cisaillement, lorsque la descente de pulvérisation pendule vers l'arrière et entraîne la première bascule en basculement au-delà de sa position basculée, dans le premier sens de basculement ;
- le premier dispositif d'amortissement est monté entre la chape et la première bascule ou la deuxième bascule de manière à se comprimer, sa deuxième extrémité se rapprochant de sa première extrémité suivant le premier axe d'extension, lorsque la première bascule bascule depuis sa position relâchée vers sa position basculée, dans le premier sens de basculement ;
- le premier dispositif d'amortissement est formé d'un vérin à gaz ;
- l'ensemble comprend un deuxième dispositif d'amortissement conçu pour amortir l'entraînement de la première bascule par la descente de pulvérisation, dans le premier sens de basculement, lorsque la descente de pulvérisation pendule vers l'arrière depuis sa position d'entraînement ;
- l'ensemble comprend un troisième dispositif d'amortissement conçu pour amortir le mouvement pendulaire de la descente de pulvérisation par rapport à la première bascule ;
- le deuxième dispositif d'amortissement comprend au moins un premier plot élastomère porté par la première bascule ou par la descente de pulvérisation et conçu pour être enserré entre la première bascule et la descente de pulvérisation, lorsque la descente de pulvérisation pendule vers l'arrière depuis sa position d'entraînement ;
- le troisième dispositif d'amortissement comprend au moins un deuxième plot élastomère monté entre la première bascule et la descente de pulvérisation.

L'invention a aussi pour objet un système de pulvérisation agricole pour engin agricole, comprenant une rampe s'étendant globalement suivant une direction transversale horizontale et un ensemble tel que précédemment décrit, la chape étant montée sur la rampe.

L'invention a encore pour objet un engin agricole comprenant un système de pulvérisation agricole tel que précédemment décrit.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est une vue en perspective d'un système de pulvérisation agricole pour engin agricole comprenant un assemblage selon un monde de réalisation de l'invention ;
- la figure 2 est une vue de détail de la figure 1 ;
- la figure 3 est une vue de détail, partielle, de la figure 2 ;
- la figure 4 est une vue de détail du système de pulvérisation agricole illustré à la figure 1.

### DESCRIPTION DETAILLEE

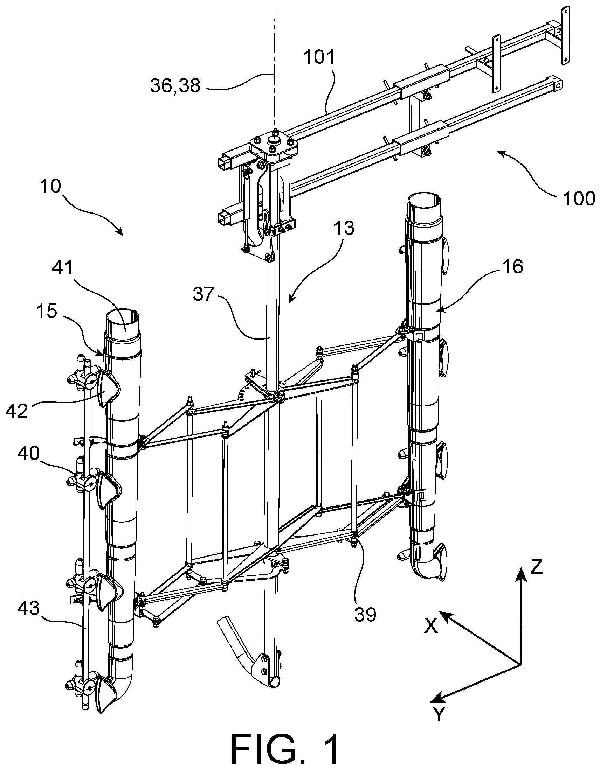

Les figures 1 à 4 montrent un système de pulvérisation agricole 100, notamment viticole ou arboricole, comprenant une rampe 101 s'étendant globalement suivant une direction transversale Y, par rapport à une direction longitudinale X orientée d'arrière en avant dans le sens d'avancement du système de pulvérisation agricole 100, ainsi qu'au moins un ensemble 10 selon un mode de réalisation de l'invention.

Les directions longitudinale X et transversale Y sont horizontales et sensiblement parallèles à un sol S.

Le système de pulvérisation agricole 100 est en contact avec le sol S, notamment via des roues (non représentées) par l'intermédiaire desquelles le système de pulvérisation agricole 100 avance dans un champ de végétaux à traiter.

Le système de pulvérisation agricole 100 est par exemple destiné à être tracté par un engin agricole (non représenté), tel qu'un tracteur. En variante, le système de pulvérisation agricole 100 est destiné à être porté par l'engin agricole. Encore en variante, le système de pulvérisation agricole 100 est automoteur et forme donc l'engin agricole.

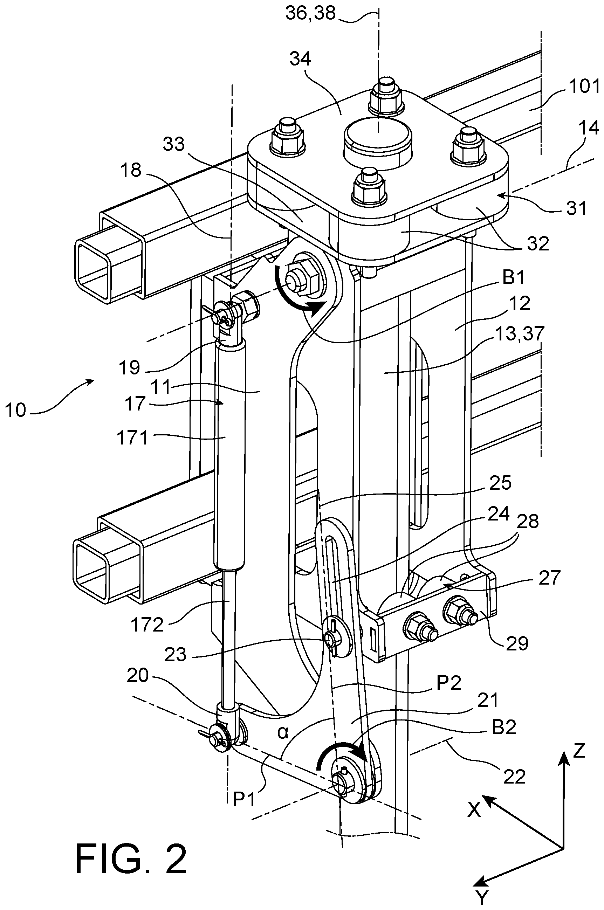

L'ensemble 10 comprend une chape 11 fixe, une première bascule 12 ainsi qu'une descente de pulvérisation 13 (figure 2).

La chape 11 est destinée à être montée sur la rampe 101, notamment à l'arrière de ladite rampe 101. La chape 11 est par exemple destinée à être montée solidaire sur la rampe 101.

La première bascule 12 est montée basculante sur la chape 11 autour d'un premier axe de basculement 14 globalement transversal.

La descente de pulvérisation 13 comprend au moins un dispositif de pulvérisation 15, 16 conçu pour pulvériser un liquide de traitement, notamment provenant d'une cuve (non représentée) du système de pulvérisation agricole 100, sur les végétaux à traiter.

La descente de pulvérisation 13 est conçue pour penduler par rapport à la première bascule 12 autour d'une position de repos dans laquelle la descente de pulvérisation 13 s'étend globalement verticalement. La descente de pulvérisation 13 est ainsi montée sur la première bascule 12 de manière pendulaire.

La descente de pulvérisation 13 est en outre conçue pour entraîner en basculement la première bascule 12 depuis une position relâchée vers une position basculée, dans un premier sens de basculement B1, lorsque la descente de pulvérisation 13 pendule, de l'avant vers l'arrière suivant la direction longitudinale X, depuis une position d'entraînement confondue avec la position de repos ou dans laquelle la descente de pulvérisation 13 est inclinée vers l'arrière par rapport à la position de repos. Ainsi, lorsque la descente de pulvérisation 13 pendule vers l'arrière, soit elle entraîne en basculement la première bascule 12 vers sa position basculée dès la position de repos, soit elle n'entraîne en basculement la première bascule 12 vers sa position basculée qu'après avoir déjà pendulé vers l'arrière depuis la position de repos.

L'ensemble 10 comprend aussi un premier dispositif d'amortissement 17 s'étendant suivant un premier axe d'extension 18 entre une première extrémité 19 montée sur la chape 11 et une deuxième extrémité 20 opposée montée sur la première bascule 12.

Le premier dispositif d'amortissement 17 est en outre conçu pour amortir le basculement de la première bascule 12 depuis sa position relâchée vers sa position basculée, dans le premier sens de basculement B1, de manière à amortir le mouvement pendulaire de la descente de pulvérisation 13 depuis sa position d'entraînement.

De cette manière, lorsque le système de pulvérisation agricole 100 avance dans le champ de végétaux à traiter et que la descente de pulvérisation 13 rentre de manière imprévue dans un obstacle, l'obstacle entraîne la descente de pulvérisation 13 en mouvement pendulaire vers l'arrière. A partir de sa position d'entraînement, que la descente de pulvérisation 13 peut notamment atteindre si l'obstacle est suffisamment imposant et/ou la vitesse d'avancement du système de pulvérisation agricole 100 est suffisamment élevée, la descente de pulvérisation 13 entraîne la première bascule 12 en basculement depuis sa position de repos vers sa position basculée, tandis que le premier dispositif d'amortissement amortit le basculement de la première bascule 12 et donc le mouvement pendulaire de la descente de pulvérisation 13. Cela permet ainsi d'éviter un mouvement pendulaire trop brutal de la descente de pulvérisation 13, lorsqu'elle percute un obstacle, qui risquerait d'endommager la descente de pulvérisation 13.

Lorsque la première bascule 12 bascule vers sa position basculée, rapprochant les première et deuxième extrémités 19, 20 du premier dispositif d'amortissement 17 l'une de l'autre, le premier dispositif d'amortissement 17 amortit le basculement de la première bascule 12 en compression. Au contraire, lorsque la première bascule 12 bascule vers sa position basculée, écartant les première et deuxième extrémités 19, 20 du premier dispositif d'amortissement 17 l'une de l'autre, le premier dispositif d'amortissement 17 amortit le basculement de la première bascule 12 en détente.

Le premier dispositif d'amortissement 17 est par exemple formé d'un vérin à gaz. Le vérin à gaz comprend une tige 171 portant l'une des première et deuxième extrémités 19, 20 et montée coulissante dans un cylindre 172 du vérin à gaz portant l'autre des première et deuxième extrémités 19, 20, de manière à écarter et à rapprocher les première et deuxième extrémités 19, 20 l'une de l'autre.

L'ensemble 10 peut aussi comprendre une deuxième bascule 21 par l'intermédiaire de laquelle le premier dispositif d'amortissement 17 est monté sur la première bascule 12. Le premier dispositif d'amortissement 17 est ainsi monté entre la chape 11 et la deuxième bascule 21, en s'étendant entre ses première et deuxième extrémités 19, 20 suivant le premier axe d'extension 18.

La deuxième bascule 21 est montée basculante sur la chape 11 autour d'un deuxième axe de basculement 22, parallèle au premier axe de basculement 14. Le deuxième axe de basculement 22 est par exemple situé verticalement en dessous du premier axe de basculement 14, c'est-à-dire en dessous d'un plan horizontal (non représenté) comprenant le premier axe de basculement 14.

La première bascule 12 est conçue pour entraîner en basculement la deuxième bascule 21 depuis une position relâchée vers une position basculée, dans un deuxième sens de basculement B2, opposé au premier sens de basculement B1, lorsque la première bascule 12 bascule elle-même depuis sa position relâchée vers sa position basculée, dans le premier sens de basculement B1.

Le premier dispositif d'amortissement 17 est en outre conçu pour amortir le basculement de la deuxième bascule 21 depuis sa position relâchée vers sa position basculée, dans le deuxième sens de basculement B2, de manière à amortir le basculement de la première bascule 12 depuis sa position relâchée vers sa position basculée, dans le premier sens de basculement B1, et ainsi à amortir le mouvement pendulaire de la descente de pulvérisation 13 vers l'arrière depuis sa position d'entraînement.

Le premier dispositif d'amortissement 17 est par exemple monté entre la chape 11 et la deuxième bascule 21 de manière à se comprimer, sa deuxième extrémité 20 se rapprochant de sa première extrémité 19 suivant le premier axe d'extension 18, lorsque la deuxième bascule 21 bascule depuis sa position relâchée vers sa position basculée, dans le deuxième sens de basculement B2. Le premier dispositif d'amortissement 17 travaille ainsi en compression.

La première extrémité 19 du premier dispositif d'amortissement 17 est par exemple agencée longitudinalement à l'avant du premier axe de basculement 14, c'est-à-dire à l'avant d'un plan transversal et vertical (non représenté) comprenant le premier axe de basculement 14. La première extrémité 19 du premier dispositif d'amortissement 17 est notamment longitudinalement plus proche de la rampe 101 que le premier axe de basculement 14.

La deuxième extrémité 20 du premier dispositif d'amortissement 17 est par exemple agencée verticalement en dessous du premier axe de basculement 14, c'est-à-dire en dessous du plan horizontal comprenant le premier axe de basculement 14.

La deuxième extrémité 20 du premier dispositif d'amortissement 17 est par exemple agencée verticalement en dessous de la première extrémité 19, c'est-à-dire en dessous d'un plan horizontal (non représenté) comprenant la première extrémité 19, lorsque la première bascule 12 occupe sa position relâchée.

La première extrémité 19 du premier dispositif d'amortissement 17 peut aussi être agencée verticalement en dessous du premier axe de basculement 14, c'est-à-dire en dessous du plan horizontal comprenant le premier axe de basculement 14.

La première extrémité 19 du premier dispositif d'amortissement 17 est par exemple située verticalement au-dessus du deuxième axe de basculement 22, c'est-à-dire au-dessus d'un plan horizontal (non représenté) comprenant le deuxième axe de basculement 22.

La première bascule 12 comprend par exemple une came 23 conçue pour coopérer avec la deuxième bascule 21 et pour entraîner la deuxième bascule 21 en basculement depuis sa position relâchée vers sa position basculée, dans le deuxième sens de basculement B2, notamment par l'intermédiaire d'au moins une surface de suiveur de came 24 portée par la deuxième bascule 21, lorsque la première bascule 12 bascule de sa position relâchée vers sa position basculée, dans le premier sens de basculement B1.

Un angle α formé entre un premier plan P1 comprenant la deuxième extrémité 20 du premier dispositif d'amortissement 17, notamment un axe sensiblement parallèle au deuxième axe de basculement 22 et autour duquel la deuxième extrémité 20 est montée, et le deuxième axe de basculement 22, et un deuxième plan P2 comprenant le deuxième axe de basculement 22 et la came 23, notamment un axe sensiblement parallèle au deuxième axe de basculement 22 suivant lequel la came 23 s'étend, est par exemple inférieur ou égal à 180°, en allant du premier au deuxième plan P2 dans le deuxième sens de basculement B2. L'angle α est ainsi considéré depuis le premier plan P1 vers le deuxième plan P2.

Le premier dispositif d'amortissement 17 est par exemple aussi conçu pour rappeler élastiquement la première bascule 12 en basculement depuis sa position basculée vers sa position relâchée, notamment dans le deuxième sens de basculement B2. De cette manière, lorsque la descente de pulvérisation 13 pendule vers l'avant vers sa position de repos, la première bascule 12 bascule elle-même vers sa position relâchée.

Bien sûr, lorsque le premier dispositif d'amortissement 17 est monté entre la chape 11 et la deuxième bascule 21, le premier dispositif d'amortissement 17 peut être conçu pour rappeler élastiquement la première bascule 12 en basculement vers sa position relâchée par l'intermédiaire de la deuxième bascule 21. Dans ce cas, le premier dispositif d'amortissement 17 est conçu pour rappeler élastiquement la deuxième bascule 21 en basculement depuis sa position basculée vers sa position relâchée, dans le premier sens de basculement B1, et la deuxième bascule 21 est conçue pour entraîner la première bascule 12 en basculement depuis sa position basculée vers sa position relâchée, dans le deuxième sens de basculement B2, par exemple par l'intermédiaire de la came 23 et de la ou des surfaces de suiveur de came 24 dont les rôles sont alors inversés, lorsque la deuxième bascule 21 bascule elle-même vers sa position relâchée.

Le premier dispositif d'amortissement 17 agit ainsi en complément du propre poids de la première bascule 12 et/ou de la deuxième bascule 21 qui tend aussi à la ou les faire basculer vers sa ou leur position relâchée.

La came 23 est par exemple formée par un axe sensiblement parallèle au deuxième axe de basculement 22. L'axe formant la came 23 peut en outre être monté glissant dans une fente ou une rainure formant la ou les surfaces de suiveur de came 24 et s'étendant suivant une ligne d'extension 25, rectiligne ou courbe, sensiblement perpendiculaire à l'axe formant la came 23. L'axe formant la came 23 entraîne ainsi la deuxième bascule 21 en basculement vers sa position basculée, dans le deuxième sens de basculement B2, en glissant le long de la fente ou de la rainure formant la ou les surfaces de suiveur de came 24, lorsque la première bascule 12 bascule depuis sa position relâchée vers sa position basculée, dans le premier sens de basculement B1. La fente ou la rainure formant la ou les surfaces de suiveur de came 24 entraîne au contraire la première bascule 12 en basculement vers sa position relâchée, dans le deuxième sens de basculement B2, en glissant le long de l'axe formant la came 23, lorsque la deuxième bascule 21 bascule depuis sa position basculée vers sa position relâchée, dans le premier sens de basculement B1.

L'axe formant la came 23 est par exemple conçu pour se rompre, lorsque la descente de pulvérisation 13 pendule vers l'arrière et entraîne la première bascule 12 en basculement au-delà de sa position basculée, dans le premier sens de basculement B1, l'axe formant la came 23 étant notamment sollicité en cisaillement par les première et deuxième bascules 12, 21. De cette manière, lorsque la descente de pulvérisation 13 essaie d'entraîner la première bascule 12 au-delà de sa position basculée, dans le premier sens de basculement B1, l'axe formant la came 24 se rompt, libérant ainsi la deuxième bascule 21 qui contraint le basculement de la première bascule 12 au-delà de la position basculée, dans le premier sens de basculement B1. Cela permet d'éviter d'endommager la descente de pulvérisation 13, qui pourrait plier sous l'effet de la butée formée par la première bascule 12 dans sa position basculée.

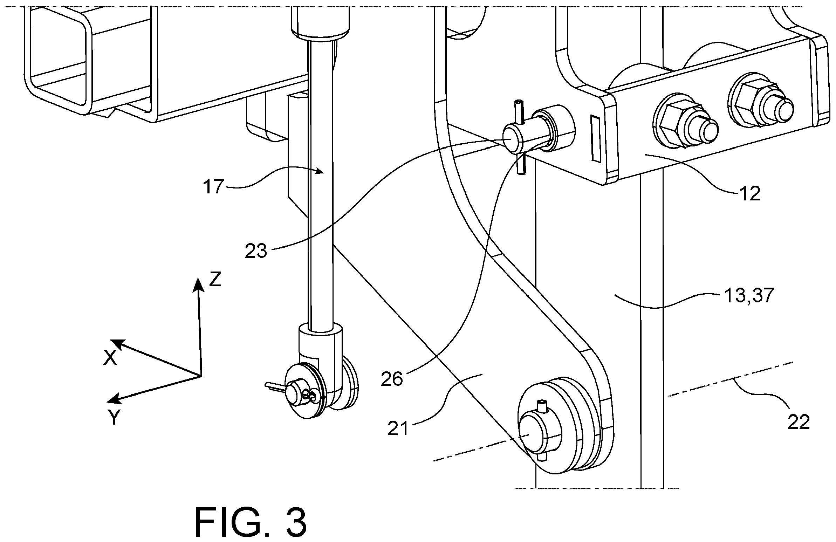

Pour cela, l'axe formant la came 23 comprend par exemple un épaulement 26 (figure 3) , notamment à arête vive, définissant un changement de section dudit axe, ledit épaulement 26 étant dimensionné de manière à ce que l'axe formant la came 23 se sectionne au niveau dudit épaulement 26, lorsque la descente de pulvérisation 13 entraîne la première bascule 12 en basculement au-delà de sa position basculée, dans le premier sens de basculement B1. Le dimensionnement de l'épaulement 26 peut être déterminé expérimentalement ou numériquement. Une arête vive permet notamment de réaliser une amorce de rupture.

En variante (non représentée), l'axe formant la came 23 comprend une gorge, notamment à arêtes vives, dimensionnée de manière à ce que l'axe formant la came 23 se sectionne au niveau de ladite gorge, lorsque la descente de pulvérisation 13 entraîne la première bascule 12 en basculement au-delà de sa position basculée, dans le premier sens de basculement B1. Le dimensionnement de la gorge peut être déterminé expérimentalement ou numériquement. Des arêtes vives permettent notamment de réaliser une amorce de rupture.

L'axe formant la came 23 est par exemple réalisé à partir d'acier, d'acier inoxydable, d'une matière plastique ou encore d'aluminium.

La chape 11 et/ou la première bascule 12 et/ou la deuxième bascule 21 et/ou une barre 37 de la descente de pulvérisation 13, qui est décrite ci-après, sont par exemple réalisées à partir d'acier, d'acier inoxydable, d'une matière plastique ou encore d'aluminium.

Deux premiers dispositifs d'amortissement 17 et le cas échéant deux deuxièmes bascules 21, agencés de manière symétrique par rapport à un plan médian longitudinal et vertical (non représenté) de l'ensemble 10, peuvent aussi être prévus.

L'ensemble 10 peut encore comprendre un deuxième dispositif d'amortissement 27 conçu pour amortir l'entraînement de la première bascule 12 par la descente de pulvérisation 13, dans le premier sens de basculement B1, lorsque la descente de pulvérisation 13 pendule vers l'arrière depuis sa position d'entraînement (figure 2).

Pour cela, le deuxième dispositif d'amortissement 27 comprend au moins un premier plot élastomère 28 porté par la première bascule 12 ou par la descente de pulvérisation 13 et conçu pour être enserré ou encore pris en sandwich entre la première bascule 12 et la descente de pulvérisation 13, lorsque la descente de pulvérisation 13 pendule vers l'arrière depuis sa position d'entraînement. Le ou les plots élastomères 28 peuvent être remplacés par une bande élastomère portée par la première bascule 12 ou par une gaine élastomère portée par la descente de pulvérisation 13, notamment autour de la barre 37 de la descente de pulvérisation 13 qui est décrite ci-après.

La première bascule 12 comprend par exemple une paroi arrière 29 qui est agencée globalement perpendiculairement à la direction longitudinale X, lorsque la première bascule 12 occupe sa position relâchée et par l'intermédiaire de laquelle la descente de pulvérisation 13 est conçue pour entraîner la première bascule 12 en basculement depuis sa position relâchée vers sa position basculée, dans le premier sens de basculement B1, lorsque la descente de pulvérisation 13 pendule vers l'arrière depuis sa position d'entraînement. Un ou plusieurs premiers plots élastomères 28 ou la bande élastomère sont par exemple montés sur la paroi arrière 29 de la première bascule 12, notamment sur une face avant de ladite paroi arrière 29 qui est agencée en regard de la descente de pulvérisation 13, de manière à être enserrés entre la première bascule 12 et la descente de pulvérisation 13, lorsque la descente de pulvérisation 13 pendule vers l'arrière depuis sa position d'entraînement.

L'ensemble 10 peut aussi comprendre un troisième dispositif d'amortissement 31 conçu pour amortir le mouvement pendulaire de la descente de pulvérisation 13, par rapport à la première bascule 12.

Pour cela, le troisième dispositif d'amortissement 31 comprend par exemple au moins un deuxième plot élastomère 32 monté entre la première bascule 12 et la descente de pulvérisation 13.

Le ou chaque deuxième plot élastomère 32 est par exemple enserré ou encore pris en sandwich entre une première plaque 33 portée par la première bascule 12 et une deuxième plaque 34 portée par la descente de pulvérisation 13, les première et deuxième plaques 33, 34 étant parallèles l'une par rapport à l'autre et globalement horizontale, lorsque la première bascule 12 occupe sa position relâchée et la descente de pulvérisation 13 occupe sa position de repos. Le ou chaque plot élastomère 32 maintient les première et deuxième plaques 33, 34 à distance l'une de l'autre, lorsque la première bascule 12 occupe sa position relâchée et la descente de pulvérisation 13 occupe sa position de repos.

La première plaque 33 comprend en outre une ouverture (non représentée) à travers laquelle la descente de pulvérisation 13 s'étend avec un jeu radial, par rapport à l'axe 36 autour duquel l'ouverture s'étend, de manière à autoriser le mouvement pendulaire de la descente de pulvérisation 13 par rapport la première bascule 12. L'axe 36 de l'ouverture est notamment orienté verticalement, lorsque la première bascule 12 occupe sa position relâchée.

Lorsque la descente de pulvérisation 13 pendule depuis sa position de repos, la deuxième plaque 34 s'incline par rapport à la première plaque 33, comprimant ou encore pressant le, l'un des ou des deuxièmes plots élastomères 32, assurant ainsi l'amortissement du mouvement pendulaire de la descente de pulvérisation 13 par rapport à la première bascule 12.

Le ou les deuxièmes plots élastomère 32 peuvent être remplacés par un ou plusieurs ressorts de compression à spirale ou encore par un ou plusieurs empilements de rondelles Belleville, notamment montés entre la première plaque 33 et la deuxième plaque 34.

Les deuxièmes plots élastomères 32, les ressorts de compression à spirale ou les empilements de rondelles Belleville sont par exemple répartis autour de l'ouverture de la première plaque 33 à travers laquelle la descente de pulvérisation 13 s'étend. Lorsqu'un unique plot élastomère, un unique ressort de compression à spirale ou un unique empilement de rondelles Belleville est mis en œuvre, le plot élastomère, le ressort de compression à spirale ou l'empilement de rondelles Belleville entoure la descente de pulvérisation 13, notamment sa barre 37 qui est décrite ci-après, et est centré sur l'axe 36 autour duquel l'ouverture de la première plaque 33 s'étend, lorsque la première bascule 12 occupe sa position relâchée et la descente de pulvérisation 13 occupe sa position de repos.

La descente de pulvérisation 13 comprend par exemple une barre 37 qui s'étend suivant un deuxième axe d'extension 38, qui porte le ou les dispositifs de pulvérisation 15, 16 et par l'intermédiaire de laquelle la descente de pulvérisation 13 est montée sur la première bascule 12 de manière pendulaire, la barre 37 s'étendant par exemple elle-même à travers l'ouverture de la première plaque 33. Le deuxième axe d'extension 38 est orienté globalement verticalement, lorsque la descente de pulvérisation 13 occupe sa position de repos. Le deuxième axe d'extension 38 peut en outre être confondu avec l'axe 36 de l'ouverture de la première plaque 33, lorsque la première bascule 12 occupe sa position relâchée et la descente de pulvérisation 13 occupe sa position de repos.

Le ou chaque dispositif de pulvérisation 15, 16 est par exemple porté par la barre 37 au moyen d'un pantographe 39 ou mécanisme à parallélogramme déformable permettant d'écarter ou de rapprocher ledit dispositif de pulvérisation 15, 16 par rapport à la barre 37, suivant la direction transversale Y.

Le ou chaque dispositif de pulvérisation 15, 16 peut encore comprendre une pluralité de buses 40 conçues chacune pour pulvériser du liquide de traitement sur les végétaux à traiter, ainsi qu'un conduit d'air 41, qui peut former un caisson monobloc et qui est pourvu de diffuseurs d'air 42 conçus chacun pour produire un flux d'air en direction des végétaux à traiter, de manière à porter le liquide de traitement pulvérisé par les buses 40.

Les buses 40 sont par exemple alimentées en liquide de traitement, notamment sous pression, par une conduite d'alimentation 43, qui peut elle-même être alimentée par un circuit d'alimentation en liquide de traitement (non représenté) du système de pulvérisation agricole 100 communiquant avec la cuve, notamment via une pompe.

Les buses 40 peuvent être montées sur la conduite d'alimentation 43, elle-même montée sur la barre 37, par exemple via le pantographe 39, ou sur les diffuseurs d'air 42.

Le conduit d'air 41 est par exemple alimenté en air sous pression par un circuit d'alimentation en air (non représenté) du système de pulvérisation agricole 100, qui comprend notamment une soufflante.

Les buses 40 peuvent être remplacées par des éclateurs chacun porté par un diffuseur d'air 42 de manière à être agencé en travers d'une ouverture dudit diffuseur d'air 42 via laquelle le diffuseur d'air 42 produit son flux d'air. Chaque éclateur comprend en outre un orifice d'entrée par l'intermédiaire duquel l'éclateur est alimenté en liquide de traitement par la conduite d'alimentation 43, un orifice de sortie de liquide de traitement, ainsi qu'une ou deux ailettes conçues pour disperser, dans le flux d'air produit par le diffuseur d'air 42 qui le porte, le liquide de traitement sortant de l'orifice de sortie.

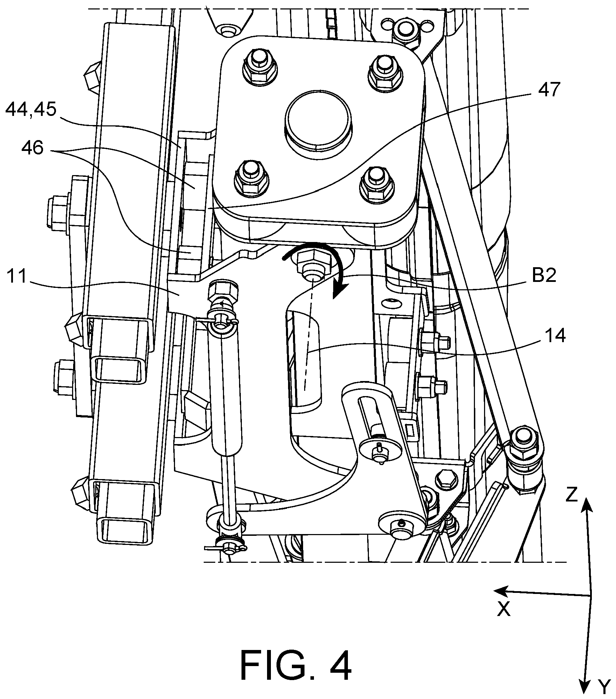

La première bascule 12 est par exemple conçue pour venir en appui contre une butée 44 (figure 4) portée par la chape 11, lorsque la première bascule 12 bascule dans le deuxième sens de basculement B2 et atteint la position relâchée. La butée 44 bloque ainsi le basculement de la première bascule 12, dans le deuxième sens de basculement B2, au-delà de sa position relâchée.

La butée 44 est par exemple formée par une paroi avant 45 de la chape 11, qui est agencée globalement perpendiculairement à la direction longitudinale X. En variante (non représentée), la butée 44 est formée par une paroi globalement horizontale de la chape 11.

La première bascule 12 peut encore comprendre au moins une protubérance 46 par l'intermédiaire de laquelle la première bascule 12 est conçue pour venir en appui contre la butée 44 portée par la chape 11, lorsque la première bascule 12 atteint sa position relâchée, en basculant dans le deuxième sens de basculement B2.

La ou les protubérances 46 s'étendent par exemple globalement longitudinalement depuis une paroi avant 47 de la première bascule 12, qui est elle-même agencée globalement perpendiculairement à la direction longitudinale X, vers la paroi avant 45 de la chape 11, lorsque la première bascule 12 occupe sa position relâchée. En variante (non représentée), la ou les protubérances 46 s'étendent globalement verticalement, notamment vers le haut, depuis la première bascule 12, vers la paroi globalement horizontale de la chape 11, qui peut notamment être agencée au-dessus de la ou des protubérances 46, lorsque la première bascule 12 occupe sa position relâchée.

La ou les protubérances 46 sont par exemple rapportées sur la première bascule 12. La ou chaque protubérance 46 est par exemple formée par un plot élastomère, par une bande élastomère, ou encore par une tête d'une vis monté sur la première bascule 12. En variante (non représentée), la ou les protubérances 46 sont formées d'un seul tenant avec la première bascule12.

En variante (non représentée), la ou les protubérances 46 peuvent être portées par la chape 11, notamment par la paroi avant 45 ou la paroi globalement horizontale de la chape 11, et ainsi former la butée 44 en elle-même.

L'ensemble 10 et le système de pulvérisation agricole 100 décrits cidessus sont particulièrement avantageux car ils permettent d'assurer un amortissement du mouvement pendulaire de la descente de pulvérisation 13, lorsque le système de pulvérisation agricole 100 avance dans le champ de végétaux à traiter et que la descente de pulvérisation 13 percute un obstacle de manière imprévue, et ainsi d'éviter un mouvement pendulaire trop brutal de la descente de pulvérisation 13, qui risquerait d'endommager la descente de pulvérisation.

## Revendications

1. Ensemble (10) pour système de pulvérisation agricole (100), comprenant :
- une chape (11) fixe,
- une première bascule (12) montée basculante sur la chape (11) autour d'un premier axe de basculement (14) globalement orienté suivant une direction horizontale transversale (Y) par rapport à une direction horizontale longitudinale (X) orientée d'arrière en avant,
- une descente de pulvérisation (13) comprenant au moins un dispositif de pulvérisation (15, 16) conçu pour pulvériser un liquide de traitement sur des végétaux à traiter d'un champ, la descente de pulvérisation (13) étant conçue pour penduler par rapport à la première bascule (12) autourd'une position de repos dans laquelle la descente de pulvérisation (13) s'étend globalement suivant une direction verticale (Z), la descente de pulvérisation (13) étant en outre conçue pour entraîner en basculement la première bascule (12) depuis une position relâchée vers une position basculée, dans un premier sens de basculement (B1), lorsque la descente de pulvérisation (13) pendule, de l'avant vers l'arrière suivant la direction longitudinale (X), depuis une position d'entraînement confondue avec la position de repos ou dans laquelle la descente de pulvérisation (13) est inclinée vers l'arrière par rapport à la position de repos,
- un premier dispositif d'amortissement (17) s'étendant suivant un premier axe d'extension (18) entre une première extrémité (19) montée sur la chape (11) et une deuxième extrémité (20) opposée montée sur la première bascule (12), le premier dispositif d'amortissement (17) étant en outre conçu pour amortir le basculement de la première bascule (12) depuis sa position relâchée vers sa position basculée, dans le premier sens de basculement (B1), de manière à amortir le mouvement pendulaire de la descente de pulvérisation (13) depuis sa position d'entraînement.

2. Ensemble (10) selon la revendication 1, comprenant une deuxième bascule (21) par l'intermédiaire de laquelle le premier dispositif d'amortissement (17) est monté sur la première bascule (12), le premier dispositif d'amortissement (17) étant ainsi monté entre la chape (11) et la deuxième bascule (21), en s'étendant entre ses première et deuxième extrémités (19, 20) suivant le premier axe d'extension (18), dans lequel la deuxième bascule (21) est montée basculante sur la chape (11) autour d'un deuxième axe de basculement (22), sensiblement parallèle au premier axe de basculement (14), dans lequel la première bascule (12) est conçue pour entraîner en basculement la deuxième bascule (21) depuis une position relâchée vers une position basculée, dans un deuxième sens de basculement (B2), opposé au premier sens de basculement (B1), lorsque la première bascule (12) bascule elle-même depuis sa position relâchée vers sa position basculée, dans le premier sens de basculement (B1), et dans lequel le premier dispositif d'amortissement (17) est conçu pour amortir le basculement de la deuxième bascule (21) depuis sa position relâchée vers sa position basculée, dans le deuxième sens de basculement (B2).

3. Ensemble (10) selon la revendication 2, dans lequel la première bascule (12) comprend une came (23) conçue pour coopérer avec la deuxième bascule (21) et pour entraîner la deuxième bascule (21) en basculement depuis sa position relâchée vers sa position basculée, dans le deuxième sens de basculement (B2), par l'intermédiaire d'au moins une surface de suiveur de came (23) portée par la deuxième bascule (21), lorsque la première bascule (12) bascule de sa position relâchée vers sa position basculée, dans le premier sens de basculement (B1), dans lequel la came (23) est formée par un axe sensiblement parallèle au deuxième axe de basculement (22), l'axe formant la came (23) étant monté glissant dans une fente ou une rainure formant la ou les surfaces de suiveur de came (24) et s'étendant suivant une ligne d'extension (25), sensiblement perpendiculaire à l'axe formant la came (23), et dans lequel l'axe formant la came (23) est conçu pour se rompre, en cisaillement, lorsque la descente de pulvérisation (13) pendule vers l'arrière et entraîne la première bascule (12) en basculement au-delà de sa position basculée, dans le premier sens de basculement (B1).

4. Ensemble (10) selon l'une des revendications 1 à 3, dans lequel le premier dispositif d'amortissement (17) est monté entre la chape (11) et la première bascule (12) ou la deuxième bascule (21) de manière à se comprimer, sa deuxième extrémité (20) se rapprochant de sa première extrémité (19) suivant le premier axe d'extension (18), lorsque la première bascule (12) bascule depuis sa position relâchée vers sa position basculée, dans le premier sens de basculement (B1).

5. Ensemble (10) selon l'une des revendications 1 à 4, dans lequel le premier dispositif d'amortissement (17) est formé d'un vérin à gaz.

6. Ensemble (10) selon l'une des revendications 1 à 5, comprenant un deuxième dispositif d'amortissement (27) conçu pour amortir l'entraînement de la première bascule (12) par la descente de pulvérisation (13,) dans le premier sens de basculement (B1), lorsque la descente de pulvérisation (13) pendule vers l'arrière depuis sa position d'entraînement.

7. Ensemble (10) selon l'une des revendications 1 à 6, comprenant un troisième dispositif d'amortissement (31) conçu pour amortir le mouvement pendulaire de la descente de pulvérisation (13) par rapport à la première bascule (12).

8. Ensemble (10) selon la revendication 6 ou la revendication 7, dans lequel :
- le deuxième dispositif d'amortissement (27) comprend au moins un premier plot élastomère (28) porté par la première bascule (12) ou par la descente de pulvérisation (13) et conçu pour être enserré entre la première bascule (12) et la descente de pulvérisation (13), lorsque la descente de pulvérisation (13) pendule vers l'arrière depuis sa position d'entraînement,
et/ou
- le troisième dispositif d'amortissement (31) comprend au moins un deuxième plot élastomère (32) monté entre la première bascule (12) et la descente de pulvérisation (13).

9. Système de pulvérisation agricole (100) pour engin agricole, comprenant une rampe (101) s'étendant globalement suivant une direction transversale (Y) horizontale et un ensemble (10) selon l'une des revendications 1 à 8, la chape (11) étant montée sur la rampe (101).

10. Engin agricole comprenant un système de pulvérisation agricole (100) selon la revendication 9.

## Patentansprüche

1. Anordnung (10) für ein landwirtschaftliches Sprühsystem (100), umfassend:
- eine feste Gabel (11),
- eine erste Wippe (12), die auf der Gabel (11) um eine erste Schwenkachse (14) schwenkend angebracht ist, die allgemein in einer Richtung angeordnet ist, die horizontal transversal (Y) in Bezug auf eine horizontale Längsrichtung (X) ist, die von hinten nach vorn ausgerichtet ist,
- ein Sprühgestänge (13), das mindestens eine Sprühvorrichtung (15, 16) umfasst, die ausgelegt ist, um eine Behandlungsflüssigkeit auf die zu behandelnden Pflanzen eines Feldes zu sprühen, wobei das Sprühgestänge (13) ausgelegt ist, um in Bezug auf die erste Wippe (12) um eine Ruhestellung, in der sich das Sprühgestänge (13) allgemein in einer vertikalen Richtung (Z) erstreckt, zu pendeln, wobei das Sprühgestänge (13) ferner ausgelegt ist, um die erste Wippe (12) aus einer entspannten Position in eine verschwenkte Position in einer ersten Schwenkrichtung (B1) schwenkend anzutreiben, wenn das Sprühgestänge (13) von vorn nach hinten in der Längsrichtung (X) aus einer Antriebsposition, die mit der Ruhestellung zusammenfällt, pendelt oder in der das Sprühgestänge (13) in Bezug auf die Ruhestellung nach hinten geneigt ist,
- eine erste Dämpfungsvorrichtung (17), die sich in einer ersten Verlängerungsachse (18) zwischen einem ersten Ende (19), das auf der Gabel (11) angebracht ist, und einem gegenüberliegenden zweiten Ende (20), das auf der ersten Wippe (12) angebracht ist, erstreckt, wobei die erste Dämpfungsvorrichtung (17) ferner ausgelegt ist, um das Schwenken der ersten Wippe (12) aus ihrer entspannten Position in ihre verschwenkte Position in der ersten Schwenkrichtung (B1) zu dämpfen, so dass die Pendelbewegung des Sprühgestänges (13) aus seiner Antriebsposition gedämpft wird.

2. Anordnung (10) nach Anspruch 1, umfassend eine zweite Wippe (21), über die die erste Dämpfungsvorrichtung (17) auf der ersten Wippe (12) angebracht ist, wobei die erste Dämpfungsvorrichtung (17) somit zwischen der Gabel (11) und der zweiten Wippe (21) angebracht ist, indem sie sich zwischen ihrem ersten und zweiten Ende (19, 20) in der ersten Verlängerungsachse (18) erstreckt, in der die zweite Wippe (21) auf der Gabel (11) um eine zweite Schwenkachse (22) schwenkend angebracht ist, die etwa parallel zur ersten Schwenkachse (14) ist, in der die erste Wippe (12) eingerichtet ist, um die zweite Wippe (21) aus einer entspannten Position in eine verschwenkte Position in einer zweiten Schwenkrichtung (B2) entgegengesetzt zur ersten Schwenkrichtung (B1) schwenkend anzutreiben, wenn die erste Wippe (12) selbst aus ihrer entspannten Position in ihre verschwenkte Position in der ersten Schwenkrichtung (B1) schwenkt, und wobei die erste Dämpfungsvorrichtung (17) eingerichtet ist, um das Schwenken der zweiten Wippe (21) aus ihrer entspannten Position in ihre verschwenkte Position in der zweiten Schwenkrichtung (B2) zu dämpfen.

3. Anordnung (10) nach Anspruch 2, wobei die erste Wippe (12) einen Nocken (23) umfasst, der eingerichtet ist, um mit der zweiten Wippe (21) zusammenzuwirken und um die zweite Wippe (21) aus ihrer entspannten Position in ihre verschwenkte Position in der zweiten Schwenkrichtung (B2) über mindestens eine Oberfläche eines Nockenmitnehmers (23) schwenkend anzutreiben, der von der zweiten Wippe (21) getragen wird, wenn die erste Wippe (12) aus ihrer entspannten Position in ihre verschwenkte Position in der ersten Schwenkrichtung (B1) schwenkt, wobei der Nocken (23) von einer Welle gebildet ist, die etwa parallel zur zweiten Schwenkachse (22) ist, wobei die Welle, die den Nocken (23) bildet, gleitend in einem Schlitz oder einer Rille angebracht ist, die die Nockenmitnehmeroberfläche(n) (24) bildet und sich in einer Verlängerungslinie (25) erstreckt, die etwa senkrecht zu der Welle ist, die den Nocken (23) bildet, und wobei die Welle, die den Nocken (23) bildet, ausgelegt ist, um scherend zu brechen, wenn das Sprühgestänge (13) nach hinten pendelt und die erste Wippe (12) über ihre verschwenkte Position hinaus in der ersten Schwenkrichtung (B1) schwenkend antreibt.

4. Anordnung (10) nach einem der Ansprüche 1 bis 3, wobei die erste Dämpfungsvorrichtung (17) zwischen der Gabel (11) und der ersten Wippe (12) oder der zweiten Wippe (21) derart angebracht ist, dass sie sich komprimiert, wobei sich ihr zweites Ende (20) ihrem ersten Ende (19) in der ersten Verlängerungsachse (18) annähert, wenn die erste Wippe (12) aus ihrer entspannten Position in ihre verschwenkte Position in der ersten Schwenkrichtung (B1) schwenkt.

5. Anordnung (10) nach einem der Ansprüche 1 bis 4, wobei die erste Dämpfungsvorrichtung (17) von einem Gasdruckfeder gebildet ist.

6. Anordnung (10) nach einem der Ansprüche 1 bis 5, umfassend eine zweite Dämpfungsvorrichtung (27), die ausgelegt ist, um den Antrieb der ersten Wippe (12) durch das Sprühgestänge (13) in der ersten Schwenkrichtung (B1) zu dämpfen, wenn das Sprühgestänge (13) aus seiner Antriebsposition nach hinten pendelt.

7. Anordnung (10) nach einem der Ansprüche 1 bis 6, umfassend eine dritte Dämpfungsvorrichtung (31), die ausgelegt ist, um die Pendelbewegung des Sprühgestänges (13) in Bezug auf die erste Wippe (12) zu dämpfen.

8. Anordnung (10) nach Anspruch 6 oder Anspruch 7, wobei:
- die zweite Dämpfungsvorrichtung (27) mindestens einen ersten Elastomerklotz (28) umfasst, der von der ersten Wippe (12) oder von dem Sprühgestänge (13) getragen wird und ausgelegt ist, um zwischen der ersten Wippe (12) und dem Sprühgestänge (13) eingeklemmt zu sein, wenn das Sprühgestänge (13) aus seiner Antriebsposition nach hinten pendelt,
und/oder
- die dritte Dämpfungsvorrichtung (31) mindestens einen zweiten Elastomerklotz (32) umfasst, der zwischen der ersten Wippe (12) und dem Sprühgestänge (13) angebracht ist.

9. Landwirtschaftliches Sprühsystem (100) für ein landwirtschaftliches Gerät, umfassend ein Gestänge (101), das sich allgemein in einer Richtung erstreckt, die transversal (Y) horizontal ist und eine Anordnung (10) nach einem der Ansprüche 1 bis 8, wobei die Gabel (11) auf dem Gestänge (101) angebracht ist.

10. Landwirtschaftliches Gerät, umfassend ein landwirtschaftliches Sprühsystem (100) nach Anspruch 9.

## Claims

1. An assembly (10) for an agricultural spraying system (100), comprising:
- a fixed yoke (11),
- a first swinging device (12) swingably mounted to the yoke (11) about a first swinging axis (14) generally oriented along a transverse horizontal direction (Y) relative to a longitudinal horizontal direction (X) oriented from back to front,
- a spraying chute (13) comprising at least one spraying device (15, 16) designed to spray a treatment liquid onto plants to be treated in a field, the spraying chute (13) being designed to swing relative to the first swinging device (12) about a rest position in which the spraying chute (13) generally extends along a vertical direction (Z), the spraying chute (13) being further designed to swingably drive the first swinging device (12) from a released position to a swung position, in a first swinging sense (B1), when the spraying chute (13) has a pendular motion, from front to back along the longitudinal direction (X), from a drive position being the same as the rest position or in which the spraying chute (13) is tilted backwards relative to the rest position,
- a first damping device (17) extending along a first extension axis (18) between a first end (19) mounted to the yoke (11) and an opposite second end (20) mounted to the first swinging device (12), the first damping device (17) being further designed to dampen swinging of the first swinging device (12) from its released position to its swung position, in the first swinging sense (B1) so as to dampen the pendular motion of the spraying chute (13) from its drive position.

2. The assembly (10) according to claim 1, comprising a second swinging device (21) through which the first damping device (17) is mounted to the first swinging device (12), the first damping device (17) being thus mounted between the yoke (11) and the second swinging device (21), by extending between its first and second ends (19, 20) along the first extension axis (18), wherein the second swinging device (21) is swingably mounted to the yoke (11) about a second swinging axis (22), substantially parallel to the first swinging axis (14), wherein the first swinging device (12) is designed to swingably drive the second swinging device (21) from a released position to a swung position, in a second swinging sense (B2), opposite to the first swinging sense (B1), when the first swinging device (12) itself swings from its released position to its swung position, in the first swinging sense (B1), and wherein the first damping device (17) is designed to dampen swinging of the second swinging device (21) from its released position to its swung position, in the second swinging sense (B2).

3. The assembly (10) according to claim 2, wherein the first swinging device (12) comprises a cam (23) designed to cooperate with the second swinging device (21) and to swingably drive the second swinging device (21) from its released position to its swung position, in the second swinging sense (B2), through at least one cam (23) follower surface carried by the second swinging device (21), when the first swinging device (12) swings from its released position to its swung position, in the first swinging sense (B1), wherein the cam (23) is formed by an axis substantially parallel to the second swinging axis (22), the axis forming the cam (23) being slidably mounted into a slot or a groove forming the cam (24) follower surface(s) and extending along an extension line (25), substantially parallel to the axis forming the cam (23), and wherein the axis forming the cam (23) is designed to be shearably broken, when the spraying chute (13) has a backward pendular motion and swingably drives the first swinging device (12) beyond its swung position, in the first swinging sense (B1).

4. The assembly (10) according to one of claims 1 to 3, wherein the first damping device (17) is mounted between the yoke (11) and the first swinging device (12) or the second swinging device (21) so as to be compressed, its second end (20) moving closer to its first end (19) along the first extension axis (18), when the first swinging device (12) swings from its released position to its swung position, in the first swinging sense (B1).

5. The assembly (10) according to one of claims 1 to 4, wherein the first damping device (17) is formed by a gas jack.

6. The assembly (10) according to one of claims 1 to 5, comprising a second damping device (27) designed to dampen driving of the first swinging device (12) by the spraying chute (13), in the first swinging sense (B1), when the spraying chute (13) has a backward pendular motion from its drive position.

7. The assembly (10) according to one of claims 1 to 6, comprising a third damping device (31) designed to dampen the pendular motion of the spraying chute (13) relative to the first swinging device (12).

8. The assembly (10) according to claim 6 or claim 7, wherein:
- the second damping device (27) comprises at least a first elastomeric block (28) carried by the first swinging device (12) or by the spraying chute (13) and designed to be sandwiched between the first swinging device (12) and the spraying chute (13), when the spraying chute (13) has a backward pendular motion from its drive position,
and/or
- the third damping device (31) comprises at least a second elastomeric block (32) mounted between the first swinging device (12) and the spraying chute (13).

9. An agricultural spraying system (100) for an agricultural machine, comprising a ramp (101) generally extending along a horizontal transverse direction (Y) and an assembly (10) according to one of claims 1 to 8, the yoke (11) being mounted to the ramp (101).

10. An agricultural machine comprising an agricultural spraying system (100) according to claim 9.
